# EUROPÄISCHE PATENTANMELDUNG

(11) **EP 1 326 216 A1**
(43) Veröffentlichungstag der Anmeldung: **09.07.2003**
(21) Anmeldenummer: 02360010.9
(22) Anmeldetag: 08.01.2002
(51) Int. Cl.: G07F 7/08

(54) **Verfahren und Vorrichtung zur elektronischen Zahlung durch mobile Kommunikationsgeräte**

(71) Anmelder: ALCATEL, 75008 Paris (FR)
(72) Erfinder: Knorr, Roger, 74354 Ottmarsheim (DE); Dütting, Kaspar, 70180 Stuttgart (DE)
(74) Vertreter: Rausch, Gabriele, Dr.

(57) **Zusammenfassung**

Die Erfindung betrifft ein Verfahren zum Transfer von elektronisch gespeicherten Guthaben über ein Kommunikationsnetz mit einem ersten mobilen Teilnehmergerät, das ein erstes Konto, insbesondere ein Prepaid-Konto, für Telefondienste verwaltet,
mit einer zentralen Vorrichtung im Netzwerk, die ein zweites Konto verwaltet. Hierbei werden folgende Schritte durchgeführt:
- Übertragung von Guthaben zwischen dem ersten und zweiten Konto sowie Übertragung von Guthaben auf weitere über das Netzwerk zugängliche Konten mit Hilfe des mobilen Teilnehmergerätes und/oder durch
- Übertragung von Guthaben zwischen dem zweiten Konto und einem weiteren Konto im Netzwerk, wobei das erste oder das zweite Konto als Proxy für das zweite oder erste Konto fungiert, so dass das zweite oder erste Konto bei der Transaktion nicht sichtbar wird.

## Beschreibung

Die Erfindung betrifft ein Verfahren und eine Vorrichtung zum Transfer von elektronisch gespeicherten Guthaben über ein Kommunikationsnetz mit einem mobilen Teilnehmergerät, das ein Prepaid-Konto für Telefondienste verwaltet.

Im Zuge der immer stärker werdenden Mobilisierung der Gesellschaft entsteht ein stetiger Bedarf an Zahlungsmöglichkeiten, die durch mobile Endgeräte wie Handys oder PDAs ausgelöst werden können.

Die bisher verwendeten Techniken greifen oftmals auf Kreditkarten zurück. Die Eingabe der Zahlenkolonnen und der Preise erscheint hierbei insbesondere bei kleinen Geräten sehr schwierig. Weiterhin wird bei der Verwendung von Kreditkarten ein hohes Sicherheitsrisiko außer Acht gelassen.

Aus der Patentschrift US 5,991,749 ist ein Verfahren bekannt, bei dem Zahlungen durch die Eingabe eines bestimmten Codes ausgelöst werden. Hierbei wählt sich der Benutzer durch Eingabe von bestimmten Codes in einen zentralen Rechner ein, der dann über die Eingabe von Tastencodes, insbesondere Funktionscodes, gesteuert wird.

Aus der Patentschrift US 6,169,890 ist ein Verfahren bekannt, bei dem eine SIM-Karte in einem GSM-Netzwerk verwendet wird, um eine sichere Kommunikation in Umgebungen mit hohen Sicherheitsstandards zu realisieren. Dabei wird eine Verbindung aufgebaut, die einerseits durch die SIM-Karte und andererseits durch einen PIN bestätigt wird. Nachdem der Benutzer authentifiziert wurde, wird die Verbindung zu einem Serviceprovider durchgeschaltet, bei dem die Transaktionen ablaufen können.

Aus der Druckschrift US 5,915,226 ist ein Verfahren bekannt, bei dem auf einer SIM-Karte ein Guthaben abgelegt wird, das bei jeder Benutzung belastet wird. Hierbei wird die Seriennummer mit einer Schlüsselnummer verrechnet. Genaue Angaben kann man der entsprechenden Druckschrift entnehmen.

Aufgabe der vorliegenden Erfindung ist es, ein Verfahren und eine Vorrichtung bereitzustellen, durch die es möglich ist, bei größter Mobilität Transaktionen vorzunehmen. Hierbei sollen nicht nur Konten belastet werden, die zum Telefonieren dienen, sondern ebenfalls Konten, mit denen Zahlungen für Konsumgüter vorgenommen werden können. Auf Grund der hohen Sicherheitsstandards ist es jedoch von Vorteil, wenn bestehende Konten insbesondere auf SIM-Karten eingebunden werden könnten, um Bezahlungen vorzunehmen. Weiterhin kann es von Vorteil sein, wenn andere Konten für den Empfänger nicht sichtbar sind, damit ein Missbrauch ausgeschlossen werden kann.

Diese Aufgabe wird durch die Erfindungen gemäß den unabhängigen Ansprüchen gelöst. Vorteilhafte Weiterbildungen der Erfindungen sind in den Unteransprüchen gekennzeichnet.

Ein wichtiger Aspekt der vorliegenden Erfindung ist ein Verfahren zum Transfer von elektronisch gespeicherten Guthaben über ein Kommunikationsnetz mit einem ersten mobilen Teilnehmergerät, das ein erstes Konto, insbesondere ein Prepaid-Konto, für Telefondienste verwaltet, mit einer zentralen Vorrichtung im Netzwerk, die ein zweites Konto verwaltet, wobei zwischen beiden Konten eine Übertragung von Guthaben sowie von mindestens einem Konto eine Übertragung von Guthaben auf weitere über das Netzwerk zugängliche Konten mit Hilfe des mobilen Teilnehmergerätes möglich ist. Durch diesen Ansatz ist es möglich, dass lediglich das Prepaid-Konto, das entweder direkt auf dem mobilen Endgerät oder zentral verwaltet wird, für Bezahlungen verwendet wird. Dieses Konto wird je nach Bedarf aufgeladen und kann somit für Bezahlungen von Konsumgütern und für die Bezahlung von Telefondiensten verwendet werden. Eine Möglichkeit besteht darin, das Guthaben verschlüsselt auf der Karte abzulegen, wobei bekannte Verschlüsselungsverfahren verwendet werden. Durch die Möglichkeit der Transaktionen zwischen den einzelnen Konten kann sichergestellt werden, dass nur notwendige Beträge auf dem mobilen Endgerät zur Verfügung stehen. Sollte ein größerer Betrag benötigt werden, so kann dieser kurz vor der Transaktion geladen werden, um ihn dann weiter zu schicken. Durch die Zuordnung von zwei Konten zu einem mobilen Endgerät können die Sicherheitsvorkehrungen, die für das bekannte SIM-Konto angewandt werden, auch auf das zweite Netzwerkkonto übertragen werden. Hierdurch ist es möglich, ein einmaliges Login zu verwenden, um beide Konten zu verwalten. Weiterhin kann für beide Konten ein Sicherheitskonzept eingesetzt werden, wie zum Beispiel Transaktionsnummern. Das zentrale Konto kann wie ein übliches Bankkonto von außen durch Überweisungen angesprochen werden. Hierdurch kann es jederzeit aufgefüllt werden. Das zentrale Konto dient als Schnittstelle zu normalen Bankkonten. Das Konto auf dem mobilen Endgerät dient zur Zahlung von Konsumgütern oder Telefon-Services, die bargeldlos jederzeit vorgenommen werden können. Durch die Trennung der beiden Konten wird der Sicherheitsstandard enorm erhöht. Sollte das Telefon verloren gehen, so ist damit lediglich das Guthaben dass sich direkt auf dem Telefon befand verloren, nicht jedoch das Guthaben auf dem dahinterliegenden Konto. Durch die nicht transparente Proxyfunktion des mobilen Kontos kann somit vermieden werden, dass große Geldbeträge verloren gehen. Sollte das mobile Endgerät verloren gehen, so können beide Konten durch eine einzige Sperrung deaktiviert werden. Aufgrund der engen Verknüpfung der beiden Konten können der Sicherheitsstandard und die Vertrauensbeziehungen leicht übertragen werden.

In der bevorzugten Ausführungsform erfolgt die Übertragung von Geldbeträgen intransparent im Hintergrund. Hierbei wird das Konto auf dem mobilen Gerät als Proxy-Konto verwendet. Zahlungen erfolgen über dieses Konto, wobei automatisch Guthaben vom Zentralkonto abgebucht werden oder überprüft wird, ob ein Kredit gewährt werden kann.

Das Endgerät oder der zentrale Server merken sich häufig ausgeführte Transaktionen, die dem Benutzer angeboten werden, ohne dass eine Vielzahl von Informationen eingegeben werden muss. Hierdurch ist es möglich, dass der Benutzer Makros verwendet, mit denen er die Transaktionen zwischen den Konten steuern kann. Transaktionen werden durch Befehle vom Teilnehmergerät ausgelöst, wobei insbesondere Makros verwendet werden, um häufig auftretende Transaktionen einfach zu starten.

Um Proxy-Transaktionen zu ermöglichen, werden mehrere Transaktionen zu einer Transaktion gekapselt. So wird z. B. bei einer Überweisung über das Konto des mobilen Endgerätes eine erste Transaktion ausgeführt, die Guthaben vom zentralen Konto in Echtzeit überträgt, um dann dieses Guthaben auf das Zielkonto zu überweisen. Sollte eine Echtzeit-Transaktion nicht möglich sein, so wird um die Gewährung eines Kredites angefragt. Dies ist möglich, da beide Konten in einem Vertrauensverhältnis stehen. Erst zu einem späteren Zeitpunkt wird das Guthaben tatsächlich übertragen.

Damit der Verlust des Endgerätes nicht zu größeren Schäden führt, kann für den Zugriff auf das zentrale Konto zusätzlich ein Passwort verlangt werden. Es ist auch denkbar, dass nach einer bestimmten Zeit der Benutzer wieder automatisch ausgeloggt wird. Zusätzlich ist es denkbar, dass TANs verwendet werden. Die Kommunikation zwischen den beiden Konten erfolgt verschlüsselt, wobei vorzugsweise ein asymmetrisches oder symmetrisches Verfahren verwendet wird und die entsprechenden Schlüssel aufgrund der Vertrauensstellung von Zeit zu Zeit automatisch ausgetauscht werden. Es ist ebenfalls denkbar, dass die Verschlüsselung auf der Basis der SIM erfolgt.

In einer bevorzugten Ausführungsform handelt es sich um ein Telefonnetzwerk, wie es bei mobilen Teilnehmern verwendet wird (GSM, UMTS). Es ist jedoch auch denkbar, dass die Informationen über das Internet ausgetauscht werden, wobei der zentrale Server ein dezidiertes Konto bereitstellt. Aufgrund der Verschmelzung von Daten und Telefonnetzen ist eine solche Verschmelzung in naher Zukunft zu erwarten. Für die Verschlüsselung kann in diesem Falle SSL verwendet werden, wobei die Vertrauensbeziehungen durch Zertifikate abgebildet werden.

Ein weiterer Bestandteil der vorliegenden Erfindung ist ein Teilnehmergerät, insbesondere ein mobiles Endgerät, das das erste Konto verwaltet, wobei das Guthaben des ersten Kontos auf dem Teilnehmergerät selber oder auf einem Knoten im Netzwerk verwaltet wird. Es sei darauf hingewiesen, dass es nicht maßgeblich ist, ob das Guthaben auf dem Handy selber verwaltet wird oder auf einem entsprechenden Konto. Maßgeblich ist, dass zwischen dem ersten Konto und dem zweiten Konto eine Vertrauensbeziehung besteht, die durch entsprechende Sicherheitsmechanismen realisiert wird. Diese Vertrauensbeziehung kann wie bereits oben beschrieben wurde durch Zertifikate, Schlüssel oder bestimmte Identifikationsparameter begründet sein. Weiterhin umfasst das Endgerät die Möglichkeit, die Konten so zu verwalten, dass eines der beiden Konten als Proxy-Konto verwendet wird. Das detaillierte Verfahren wurde bereits oben beschrieben. In einer bevorzugten Ausführungsform kann das Prepaid-Konto eines Telefons verwendet werden, um bestimmte Geldbeträge auf dem Endgerät zwischen zu speichern.

Ein weiterer Bestandteil der vorliegenden Erfindung ist eine Software, die die Funktionalität des Verfahrens auf einem beliebigen Endgerät implementiert. Dies ist besonders dann wichtig, wenn Endgeräte wie kleine PCs ausgestattet sind. Momentan erhältliche Handgeräte weisen bereits größere Mengen an Speicher (64 MB) auf. Für solche Endgeräte ist es ohne Weiteres möglich, die entsprechende Funktionalität durch eine Software zu realisieren, die im Hintergrund abläuft.

Die Software stellt Schnittstellen bereit, die den Austausch von Guthaben mit anderen Konten im Netzwerk erlauben, wobei die Software eine Funktionalität aufweist, die das erste oder zweite Konto als Proxy-Konto für ein zweites oder erstes Konto erscheinen lässt, so dass das zweite oder erste Konto bei einer Transaktion mit anderen Konten nicht sichtbar wird. Die Software ist weiterhin in der Lage, Guthaben verschlüsselt abzulegen, so dass ein Zugriff von außen nicht möglich ist. Es ist sogar denkbar, dass das Guthaben auf der Telefonkarte des Endgerätes abgelegt wird, so dass ebenfalls Batterie- und Spannungsschwankungen ohne Konsequenz bleiben. Je nach Aufbau der Prepaidkarte kann das Konto auf dieser abgebildet werden.

Im Folgenden wird die Erfindung anhand von Ausführungsbeispielen näher erläutert, die in den Figuren schematisch dargestellt sind. Gleiche Bezugsziffern in den einzelnen Figuren bezeichnen dabei gleiche Elemente. Im Einzelnen zeigt:
- Fig. 1: ein Netzwerk mit einem mobilen Teilnehmer, der über ein erstes Konto verfügt, mit einem zweiten Konto im Netzwerk und einem dritten Konto, das für mögliche Transaktionen als Empfängerkonto dient;
- Fig. 2: eine alternative Ausführungsform, wobei das erste Konto direkt auf dem Endgerät verwaltet wird.

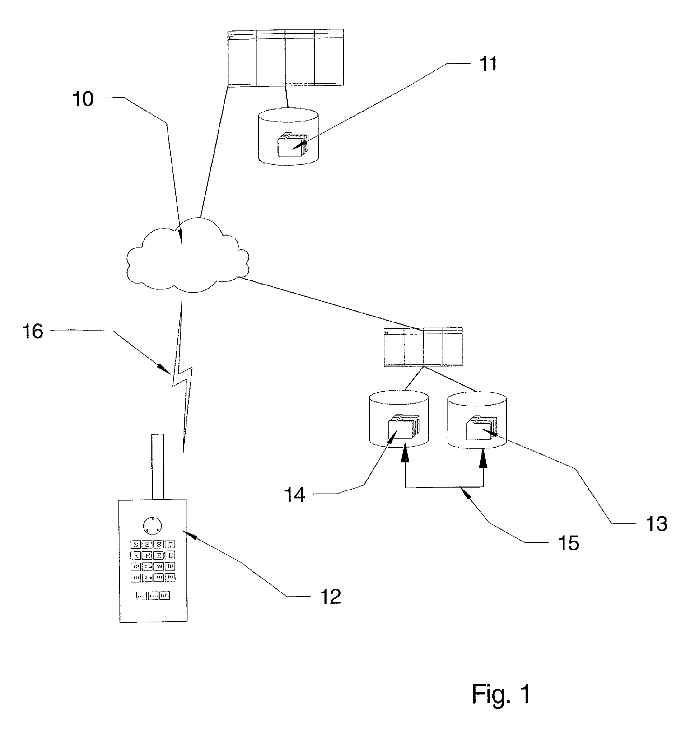

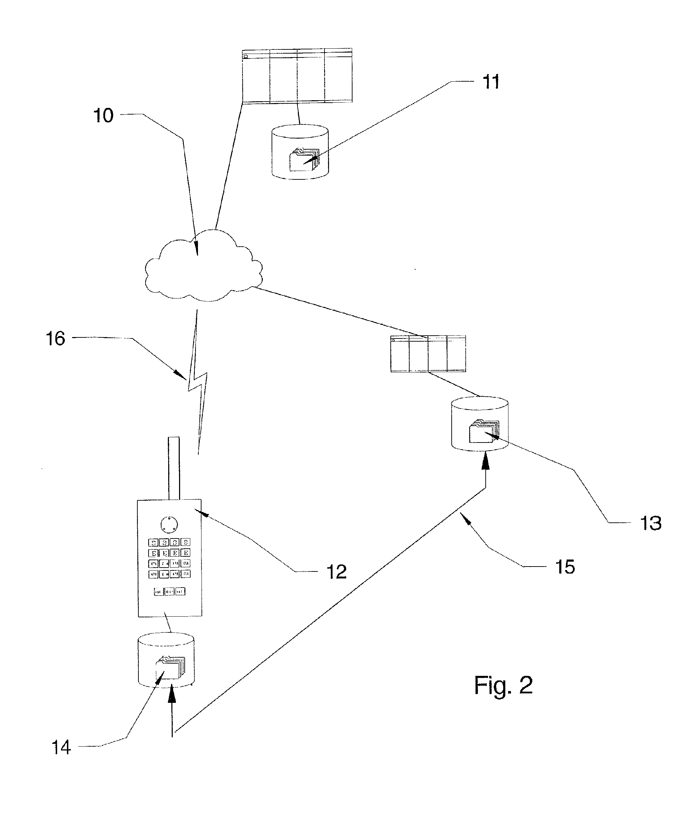

Die Figur 1 zeigt ein Netzwerk 10, an das ein erster Server angeschlossen ist, der 2 Konten 14 und 13 verwaltet, die in einer Vertrauensbeziehung 15 stehen. Das Netzwerk ist weiterhin über eine drahtlose Verbindung 16 mit einem mobilen Endgerät 12 verbunden. Über das Netzwerk ist weiterhin ein drittes Konto 11 angeschlossen, so dass Transaktionen zwischen den Konten 14, 13 und 11 in der oben beschriebenen Weise durchgeführt werden können. Im Vergleich zur Figur 2 ist das Prepaid-Konto 14 in Figur 1 ebenfalls zentral angeordnet. Hierdurch wird die Sicherheit noch erheblich erhöht, so dass ein Verlust des Endgerätes 12 nicht zu einem Verlust des Guthabens führen kann. In Figur 2 wird das Konto hingegen auf dem mobilen Endgerät verwaltet. Hierbei werden die bekannten Verschlüsselungsverfahren verwendet.

## Patentansprüche

1. Verfahren zum Transfer von elektronisch gespeicherten Guthaben über ein Kommunikationsnetz mit einem ersten mobilen Teilnehmergerät, das ein erstes Konto, insbesondere ein Prepaid-Konto, für Telefondienste verwaltet,
mit einer zentralen Vorrichtung im Netzwerk, die ein zweites Konto verwaltet, **gekennzeichnet durch** folgende Schritte:
- Übertragung von Guthaben zwischen dem ersten und zweiten Konto sowie Übertragung von Guthaben auf weitere über das Netzwerk zugängliche Konten mit Hilfe des mobilen Teilnehmergerätes und/oder **durch**
- Übertragung von Guthaben zwischen dem zweiten Konto und einem weiteren Konto im Netzwerk, wobei das erste oder das zweite Konto als Proxy für das zweite oder erste Konto fungiert, so dass das zweite oder erste Konto bei der Transaktion nicht sichtbar wird.

2. Verfahren nach Anspruch 1, **dadurch gekennzeichnet, dass** die Transaktionen durch Befehle vom Teilnehmergerät ausgelöst werden, wobei insbesondere Makros verwendet werden, um häufig auftretende Transaktionen einfach zu starten.

3. Verfahren nach Anspruch 1, **dadurch gekennzeichnet, dass** die Transaktionen gekapselt werden, in dem zwei Transaktionen durchgeführt werden, wobei die erste Transaktion ein Guthaben vom zweiten Konto auf das erste bucht, um danach das Guthaben vom ersten Konto auf das Zielkonto zu übertragen, oder
indem dem ersten Konto nach Überprüfung des zweiten Kontos ein Kredit gewährt wird, der zu einem späteren Zeitpunkt über das zweite Konto ausgeglichen wird.

4. Verfahren nach Anspruch 1, **dadurch gekennzeichnet, dass** die Kommunikation verschlüsselt, die Transaktionen mit Passwort und/oder mit einer Transaktionsnummer gesichert sind.

5. Verfahren nach Anspruch 1, **dadurch gekennzeichnet, dass** das Netzwerk ein Telefonnetz oder das Internet ist.

6. Teilnehmergerät, insbesondere mobiles Endgerät, in einem Netzwerk, das ein erstes Konto verwaltet, wobei das Guthaben des ersten Kontos auf dem Teilnehmergerät selber oder von einem Knoten im Netzwerk verwaltet wird, **gekennzeichnet durch** Mittel, die einen Austausch von Guthaben zwischen dem ersten und einem zweiten Konto im Netzwerk erlauben und/oder
**durch** Mittel, die das erste oder zweite Konto als Proxy-Konto für das zweite oder erste Konto erscheinen lassen, so dass das zweite oder erste Konto bei der Transaktion nicht sichtbar wird.

7. Teilnehmergerät nach dem vorhergehenden Anspruch, **dadurch gekennzeichnet, dass** zur Realisierung der Proxy-Funktion zwei Transaktionen durchgeführt werden, wobei die erste Transaktion ein Guthaben vom zweiten Konto auf das erste bucht, um danach das Guthaben vom ersten Konto auf das Zielkonto zu übertragen, und/oder
indem dem ersten Konto nach Überprüfung des zweiten Kontos ein Kredit gewährt wird, der zu einem späteren Zeitpunkt über das zweite Konto ausgeglichen wird.

8. Teilnehmergerät nach Anspruch 6, **dadurch gekennzeichnet, dass** Telefonprepaidkarten als Konto verwendet werden.

9. Software für ein mobiles Endgerät in einem Netzwerk, das ein erstes Konto verwaltet, wobei das Guthaben auf dem mobilen Endgerät oder durch einen zentralen Knotenpunkt im Netzwerk gespeichert wird, wobei die Software Schnittstellen bereitstellt, die den Austausch von Guthaben mit anderen Konten im Netzwerk erlauben, wobei die Software eine Funktionalität aufweist, die das erste oder zweite Konto als Proxy-Konto für ein zweites oder erstes Konto erscheinen lässt, so dass das zweite oder erste Konto bei einer Transaktion mit anderen Konten nicht sichtbar wird.

10. Software nach dem vorhergehenden Anspruch, **dadurch gekennzeichnet, dass** das Konto auf der Basis einer Prepaidkarte abgebildet wird.
